# EUROPEAN PATENT APPLICATION

(11) **EP 2 355 289 A2**
(43) Date of publication of application: **10.08.2011**
(21) Application number: 11150687.9
(22) Date of filing: 12.01.2011
(51) Int. Cl.: H02H 3/16, H02H 5/10, H02H 7/08

(54) **Stepping motor connection detecting circuit**

(30) Priority: 29.01.2010 JP 2010019460
(71) Applicant: Fujitsu Frontech Limited, Inagi-shi, Tokyo 206-8555 (JP)
(72) Inventor: Higaside, Tomohiro, Inagi-shi Tokyo 206-8555 (JP)
(74) Representative: Stebbing, Timothy Charles

(57) **Abstract**

A stepping motor connection detecting circuit can detect on a driving circuit (2) side a omission of a connector (3), or a breaking or a short circuit of wiring (6-1, 6-2, ...) from the connector (3) to a stepping motor. The motor connection detecting circuit (1) includes: a first branch point (11-1, 11-2, ...) provided for each arrangement of wiring (6-1, 6-2, ...) corresponding to each coil (5-1, 5-2, ...) of the stepping motor from a connector (3), which connects a stepping motor (4) to a driving circuit (2), to the driving circuit (2); first and second resistors R1 and R2 provided in a series between the first branch point 11 and a ground; a second branch point (12) provided between the first and second resistors R1 and R2; a detecting transistor (Tr2) whose base is connected to the second branch point (12), whose detecting power source (13) is connected to a collector through a third resistor, whose emitter is grounded, and whose collector signal IN1 is output to the detecting input port (14)of a control unit (10).

## Description

### Technical Field

The present invention relates to a stepping motor connection detecting circuit for detecting on a driving circuit side an omission of a connector, or a break in or a short circuit of the wiring from the connector to a stepping motor in a driving circuit for connection to the stepping motor through the connector.

### Background Art

A stepping motor has been conventionally known as a motor driven by a DC power source, having no sliding contact member such as a feeding brush etc., requiring no maintenance, having high positioning accuracy, and accumulating no error.

The stepping motor is driven by exciting a motor coil by turning on/off several phases of driving voltages on the motor coil from a driving circuit. Normally, the stepping motor is connected to the driving circuit through a connector.

There is no problem when a plug is correctly connected to a jack of the connector. However, there can be a case where a plug is diagonally inserted into a jack, and an incomplete connection occurs on one terminal, that is, an incomplete insertion of a connector can occur.

In this state, in several phases of driving the stepping motor, there are a phase in which a motor coil is connected and a phase in which the motor coil is not connected.

If a driving voltage is continuously applied in this state, and when the phase in which the counter electromotive current occurring in the motor coil is a disconnecting phase when the motor coil of the connection phase is in the off state, then the flow path is disconnected, and the current flows through the driving circuit of the phase in which the applied voltage is turned on/off.

If the drive continues, the driving circuit of the phase in which the applied voltage is turned on/off is heated, and finally a destruction by heat occurs in the circuit. To avoid the problem, a heat detection circuit is incorporated in the driving circuit to stop the drive before the destruction by heat. However, since the drive is stopped after generating the heat, the degradation of the driving circuit by the heat cannot be prevented.

To solve the above-mentioned problem, the Japanese Laid-open Patent Publication No. H03-012785 proposes an omitted connector detection system for providing detection pins at both ends of the connector for connecting a control board to a drive board, monitoring the feeding potential and the ground potential of the detection pins, and detecting incomplete insertion of the connector.

The detection circuit according to the Japanese Laid-open Patent Publication No. H03-102785 is designed with a complicated circuit configuration so as to detect a breaking of the control circuit wiring of the control board and a breaking of a driving circuit wiring of the drive board.

Furthermore, the Patent Publication No. 2802760 proposes an omitted connector detection circuit for outputting a connector connection signal through a connector pin of a connector for connecting a control substrate to an input/output substrate, passing a control signal to a driving circuit when the connection signals of all connector pins are detected, and cutting off the control signal when a connection signal of any connector pin is detected to stop the drive.

In addition, the Japanese Laid-open Patent Publication No. S57-098985 proposes a connector omission fault detection system for providing a loopback grounding line for a connector to turn on the grounding line of the plug through the loopback line of the jack so that the omission of the connector can be detected by turning off the grounding line when there occurs a breaking between the jack and the plug.

However, in driving a stepping motor, there occur not only an error of an incomplete insertion of a connector for connecting a control circuit board to a driving circuit board, but also an error of an incomplete insertion of a connector for connecting a driving circuit to a stepping motor, a breaking of feeding wiring from a connector to a stepping motor, a short circuit between a feeding wiring and a unit frame, etc.

Nevertheless, the detection of an omission of a connector in the technology according to the Japanese Laid-open Patent Publication No. H03-102785 does not refer to the detection of an omission of a connector for connecting a driving circuit to a stepping motor, and the detection of a breaking of the wiring of the circuit in the board cannot solve the problem of the breaking of the external wiring from the driving circuit to the stepping motor.

In addition, the conventional technology according to the Patent Publication No. 2802760 or the Japanese Laid-open Patent Publication No. S57-098985 only detects an omission of a connector to stop the drive of a driving circuit, but proposes no idea against a breaking of external wiring from a driving circuit to a stepping motor, a short circuit to a unit frame, etc.

### Disclosure of the Invention

The present invention has been developed in view of the above-mentioned problems, and aims at providing a stepping motor connection detecting circuit for detecting on the driving circuit side an omission of a connector, or a break or a short circuit of the wiring from a connector to a stepping motor.

A first stepping motor connection detecting circuit according to the invention is configured by: a first branch point provided for each arrangement of wiring corresponding to each coil of a stepping motor from a connector, which connects the stepping motor to a driving circuit, to the driving circuit; first and second resistors provided in a series between the first branch point and a ground; a second branch point provided between the first and second resistors; a detecting transistor whose base is connected to the second branch point, whose detecting power source is connected to a collector through a third resistor, and whose emitter is grounded; and a control unit in which a collector signal of the detecting transistor is connected to a detecting input port.

In the stepping motor connection detecting circuit, for example, if the first resistor is a resistor on the power source side and the resistance of the resistor is R1, and the second resistor is a resistor on the grounding side and the resistance of the resistor is R2, then R1 is larger than R2 (R1 > R2). If the potential of the first branch point is +40V, the current passing through the first resistor from the first branch point is 360 µA.

The control unit determines that there is no abnormal condition in the connection of the connector and in the wiring corresponding to each coil of the stepping motor when, for example, the collector signal is in a low state, and determines that there is an omission of the connector or that there is a break or a short circuit in the wiring to the stepping motor connected to the detecting transistor whose collector signal enters a high state through the second branch point and the first branch point when the collector signal is in the high state.

A second stepping motor connection detecting circuit according to the invention is configured by: a first branch point provided for each arrangement of wiring corresponding to each coil of a stepping motor from a connector, which connects the stepping motor to a driving circuit, to the driving circuit; first and second resistors provided in a series between the first branch point and a ground; a second branch point provided between the first and second resistors; a first detecting transistor whose base is connected to the second branch point, whose detecting power source is connected to a collector through a third resistor, and whose emitter is grounded; a second detecting transistor which is wired OR connected to the collector of the first detecting transistor, whose base receives a signal synchronous with a drive signal of the driving circuit, and whose emitter is grounded; and a control unit whose detecting input port has a connection of a signal from the wired OR connection.

The control unit determines that there is no abnormal condition in the connection of the connector and in the wiring corresponding to each coil of the stepping motor when, for example, the signal from the wired OR connection is in a low state, and determines that there is an omission of the connector or that there is a breaking or a short circuit in the wiring to the stepping motor connected to the wired-OR-connected first detecting transistor whose signal enters a high state through the second branch point and the first branch point when the collector signal is in the high state.

When the control unit determines that, for example, there is an omission of the connector, or there is a break or a short circuit in the wiring corresponding to each coil of the stepping motor, the control unit notifies an external unit of the occurrence of an abnormal condition.

### Brief Description of Drawings

FIG. 1 is an explanatory view of a motor connection detecting circuit of the stepping motor according to the embodiment 1 of the present invention;
FIG. 2A is a main flowchart of the driving process including the abnormal condition monitoring process of the stepping motor according to the embodiment 1;
FIG. 2B is a flowchart of the details of the abnormal condition monitoring process of the main flowchart;
FIGS. 3(a) through 3(f) are timing charts of the timing of turning-on/off of the operation signal of each unit described with reference to the flowcharts in FIGS. 2A and 2B;
FIG. 4 is an explanatory view of a motor connection detecting circuit of the stepping motor according to the embodiment 2 of the present invention;
FIG. 5 is a main flowchart of the driving process including the abnormal condition monitoring process of the stepping motor according to the embodiment 2; and
FIGS. 6(a) through 6(h) are timing charts of the timing of turning-on/off of the operation signal of each unit described with reference to the flowchart in FIG. 5.

### Lists of reference numerals

- 1: motor connection detecting circuit
- 2: motor driver
- 3: connector
3a jack
3b plug
- 4: stepping motor (pulse motor)
- 5: (5-1, 5-2, ...) motor coil
- 6: (6-1, 6-2, ...) driving wiring
- 7: DC power source
- 8: switching FET (field effect transistor)
- 10: control unit
- 11: (11-1, 11-2, ...) first branch point
- 12: second branch point
- 13: detecting power source
- 14: detecting IN1 signal input port
- 15: OUT1 signal output port
- 16: warning LED
- 17: OUT2 signal output port
- 18: warning light power source
- R1: first resistor
- R2: second resistor
- R3: third resistor
- Tr1: driving transistor
- Tr2: detecting transistor (first detecting transistor)
- Tr3: second detecting transistor

### Detailed Description

### Best Mode for Carrying Out the Invention

The embodiments of the present invention are described below in detail.

### Embodiment 1

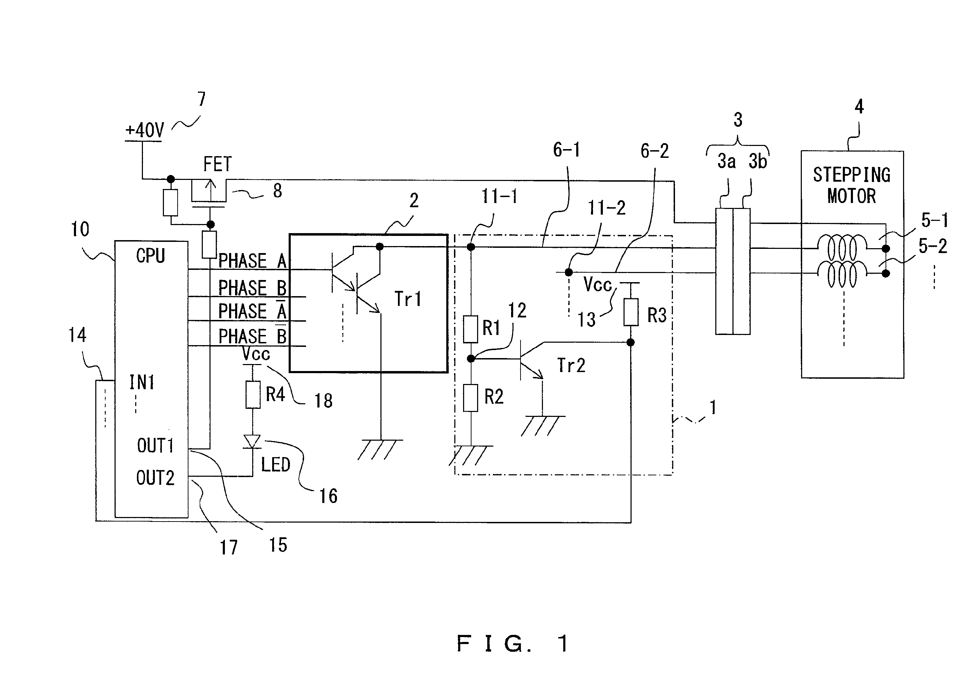

FIG. 1 is an explanatory view of a stepping motor connection detecting circuit according to the embodiment 1 of the present invention. As illustrated in FIG. 1, a stepping motor connection detecting circuit according to the present embodiment (hereinafter referred to simply as a motor connection detecting circuit) 1 is formed between a stepping motor driving circuit (hereinafter referred to as a motor driver) 2 and a connector 3.

The connector 3 includes a jack 3a and a plug 3b which can be freely attached to and removed from each other, and the motor driver 2 can be connected to a stepping motor 4 by coupling the jack 3a and the plug 3b to each other.

A driving transistor Tr1 of the motor driver 2 is provided for driving wiring 6 (6-1, 6-2, ...) corresponding to each motor coil 5 (5-1, 5-2, ...) of the stepping motor 4. Each motor coil 5 is provided with a current through a switching FET (field effect transistor) 8 from a DC power source 7.

A control unit 10 including a CPU (central processing unit) outputs a control signal in a pulse state for driving the stepping motor 4 to the driving transistor Tr1 of the motor driver 2. According to the control signal, the driving transistor Tr1 is turned on and off.

When the driving transistor Tr1 is turned on, the current from the DC power source 7 passes to the ground through the motor coil 5 of the stepping motor 4 corresponding to the driving transistor Tr1 which has been turned on and the driving transistor Tr1 which has been turned on.

When the driving transistor Tr1 is turned off, the current of the motor coil 5 corresponding to the driving transistor Tr1 which has been turned off stops. The control of the passage and the cutoff of the current is repeated at predetermined intervals. The control is sequentially performed on each motor coil 5 by the "time processing of phase drive", and the stepping motor 4 rotates at desired rotation angle and rotation speed.

The motor driver 2 is described below in detail. The motor connection detecting circuit 1 not only detects an incomplete state of the coupling between the jack 3a and the plug 3b of the connector 3, but also detects a breaking and a short circuit between the connector 3 of the driving wiring 6 and the stepping motor 4.

The detection circuit is described below. The driving wiring 6 corresponding to each motor coil 5 of the stepping motor 4 is provided with a first branch point 11 (11-1, 11-2, ...) for each driving wiring 6.

For simplicity of the drawing of a configuration and the description, only the configuration corresponding to the first branch point 11-1 is described.

First, a first resistor R1 and a second resistor R2 are connected in a series between the first branch point 11 and the ground. A second branch point 12 is formed between the first resistor R1 and the second resistor R2.

The second branch point 12 is connected to the base of a detecting transistor Tr2. The emitter of the detecting transistor Tr2 is grounded, and the voltage of a detecting power source 13 is constantly applied to the collector through a third resistor R3. The signal of the collector in input as an IN1 signal to a detecting input port 14 of the control unit 10.

The control unit 10 also includes an output port 15 for outputting an OUT1 signal for control of the passage and cutout of the switching FET 8, and an output port 17 for outputting an OUT2 signal for control of turning on and off a warning LED (light emitting diode) 16. A warning power source 18 is connected to the warning LED 16 through a fourth resistor R4.

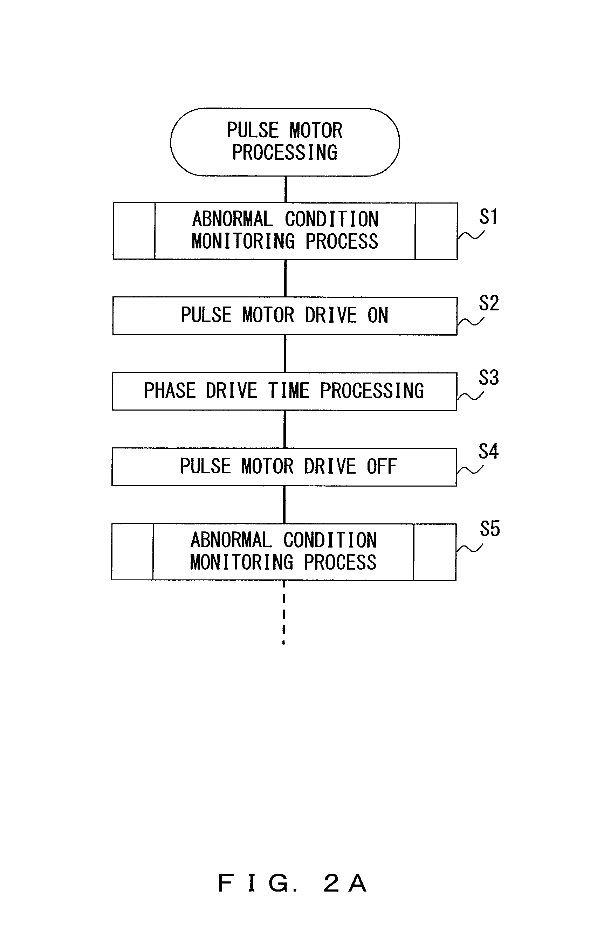

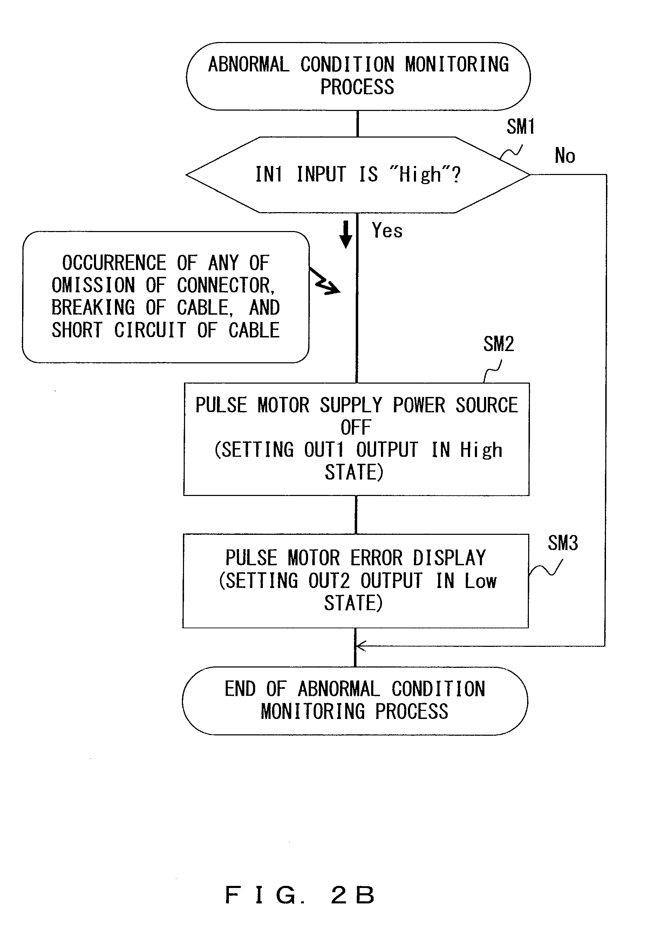

FIG. 2A is a main flowchart of the driving process of the stepping motor 4 including an abnormal condition monitoring process, and FIG. 2B is a flowchart of the details of the abnormal condition monitoring process of the main flowchart.

The processes illustrated in FIGS. 2A and 2B are performed by the control unit 10. In the descriptions of the processes, the stepping motor 4 is replaced with a pulse motor.

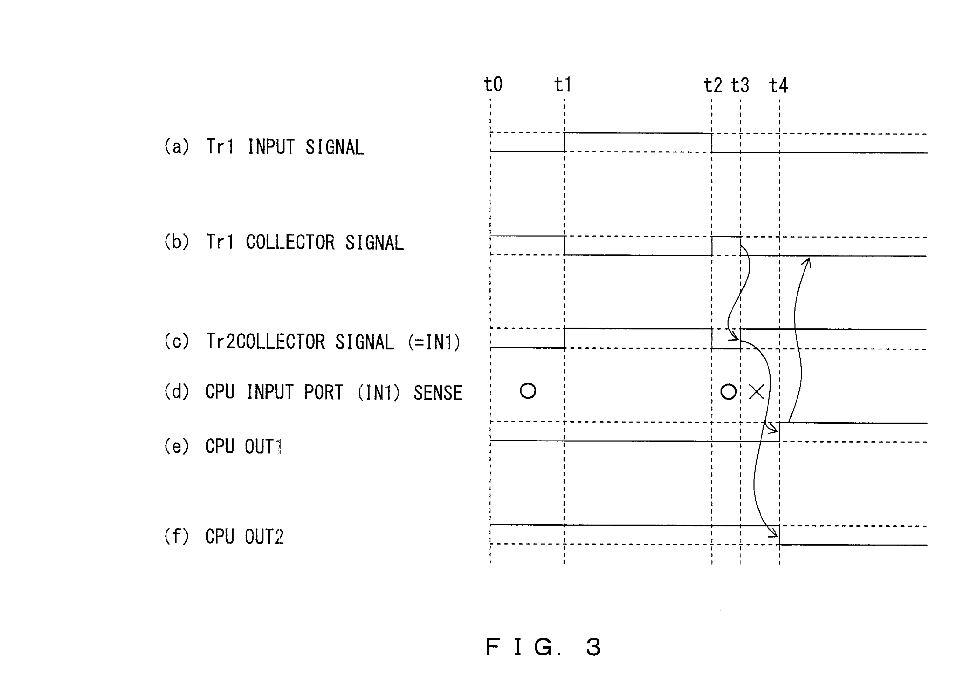

FIGS. 3(a) through 3(f) are timing charts illustrating the timing of turning on and off of the operation signal of each unit described in the flowcharts. FIG. 3(a) illustrates an input signal input to the base of the driving transistor Tr1, and 3(b) illustrates a collector signal of the driving transistor Tr1.

FIG. 3(c) illustrates a collector signal (IN1) of the detecting transistor Tr2, and FIG. 3(d) illustrates a result of the recognition of the collector signal (IN1) input to the detecting input port 14 of the control unit 10.

The result of the recognition expressed by "o" indicates that there is no abnormal condition in the motor driver 2 and the driving wiring 6, and the result of the recognition expressed by "x" indicates that there is an abnormal condition in the motor driver 2 or the driving wiring 6, that is, an omission of a connector, or an abnormal condition such as a breaking of the driving wiring 6, a short circuit between the driving wiring 6 and the unit frame, etc. has occurred.

FIG. 3 (e) illustrates an OUT1 signal output from the OUT1 signal output port 15 of the control unit 10, and FIG. 3(f) illustrates an OUT2 signal output from the OUT2 signal output port 17 of the control unit 10.

In the present embodiment, in the processes illustrated in FIGS. 2A and 2B, the control unit 10 monitors the collector signal (IN1) of the detecting transistor Tr2 only when the driving transistor Tr1 is in the off state, and determines whether the collector signal (IN1) is "o" or "x".

When the pulse motor processing illustrated in FIG. 2 is started at the time to illustrated in FIGS. 3 (a) through 3 (f) , the abnormal condition monitoring process is first performed (step S1).

When the pulse motor processing is started, the OUT1 signal enters the low state as illustrated in FIGS. 3(e) and 3(f), the switching FET 8 illustrated in FIG. 1 is turned on, the stepping motor 4 is powered up from the DC power source 7, the OUT2 signal enters the high state, and the warning LED 16 is continuously in the off state.

In the abnormal condition monitoring process, it is determined whether or not the IN1 signal (refer to FIG. 1) input to the detecting IN1 signal input port 14 is in the high state as illustrated in FIG. 2B (step SM1).

First, the case in which the connector 3 is normally connected and there is no breaking or short circuit in the driving wiring 6 is described. When the driving transistor Tr1 of the motor driver 2 is initially in the off state (period from time to to t1 in FIG. 3 (a)) , the current of the DC power source 7 does not pass through the driving transistor Tr1.

Therefore, the collector signal of the driving transistor Tr1 is in the high state (+40V) as illustrated in FIG. 3(b). Likewise, the motor coil 5, the driving wiring 6, and the first branch point 11 indicate the voltage of +40V and high potential.

Since the potential of the first branch point 11 is high, the potential of the second branch point 12 is also high. Therefore, the detecting transistor Tr2 is in the on state, and the voltage of the detecting power source 13 passes to the ground through the detecting transistor Tr2. Thus, the collector signal (IN1) of the detecting transistor Tr2 indicates the low state as illustrated in FIG. 3(c).

When the control unit 10 recognizes that the collector signal (IN1) indicates the low state (NO in SM1 in FIG. 2B), the control unit 10 determines that the collector signal (IN1) is "o" as illustrated in FIG. 3 (d) , that is, there is no abnormal condition in the motor driver 2 and the driving wiring 6, and immediately terminates the abnormal condition monitoring process as illustrated in FIG. 2B.

When the initial abnormal condition monitoring process terminates, the control unit 10 turns on the pulse motor drive, that is, turns on a desired driving transistor Tr1 (step S2) , and performs the above-mentioned phase drive time processing (step S3).

The phase drive time processing period refers to the period from time t1 to t2 in FIG. 3(a). Since the driving transistor Tr1 is in the on state, that is, the base input signal indicates the high state, the collector signal indicates the low state as illustrated in FIG. 3(b).

Similarly, since the potential of the first branch point 11 and the second branch point 12 also indicates the low state, the detecting transistor Tr2 is in the off state, and the collector signal (IN1) of the detecting transistor Tr2 indicates the high state according to the voltage of the detecting power source 13 as illustrated in FIG. 3(c).

In the present embodiment, when the driving transistor Tr1 indicates the on state as described above, the abnormal condition monitoring process is not performed by the control unit 10.

When the phase drive time processing period has passed, the control unit 10 turns off the driving transistor Tr1 for a predetermined period (step S4), and performs the abnormal condition monitoring process again (step S5).

The period from time t2 to t3 refers to a normal period in the abnormal condition monitoring process, and the collector signal (IN1) of the detecting transistor Tr2 indicates the low state as in the case from time to to t1, and the control unit 10 determines that the collector signal (IN1) is "o" as illustrated in FIG. 3(d), that is, there is no abnormal condition in the motor driver 2 and the driving wiring 6.

Described below is the case in which there occurs an omission of a connector or a breaking in the driving wiring 6-1 or a short circuit to the unit frame, etc. in the off-state period.

Assume that an error such as an omission of a connector or a break, a short circuit, etc. of the driving wiring 6-1 has occurred at the time t3 in FIG. 3(a). In any of these cases, the current from the DC power source 7 does not pass to the driving wiring 6-1. That is, the potential of the first branch point 11 is 0.

Therefore, the potential of the second branch point 12 is also 0, and the detecting transistor Tr2 indicates the off state. When the detecting transistor Tr2 indicates the off state, the collector signal (IN1) enters the high state by the voltage applied from the detecting power source 13. The collector signal (IN1) enters the control unit 10.

When the control unit 10 detects that the collector signal (IN1) of the detecting transistor Tr2, which is to indicate the low state in the non-driving operation, indicates the high state (YES in step SM1 in FIG. 2B) , the collector signal (IN1) is "x" as illustrated in FIG. 3(d). That is, it is determined that there has occurred an omission of a connector of the connector 3, or a breaking in the driving wiring 6 or a short circuit between the driving wiring 6 and the unit frame.

When the control unit 10 determines that the collector signal (IN1) indicates "x", it places the OUT1 signal in the high state at time t4 as illustrated in FIG. 3 (e) , closes the switch of the switching FET, and stops the power supply to the stepping motor 4 (step SM2 in FIG. 2B) .

Furthermore, the control unit 10 places the OUT2 signal in the low state in FIG. 3(f), turns on the warning LED, and external notifies that there has occurred an error such as an omission of a connector, or a breaking of driving wiring or a short circuit between the driving wiring and a unit frame, etc. (step SM3 in FIG. 2B) . Then, the abnormal condition monitoring process is terminated.

Assuming that the supplied voltage of the DC power source 7 is +40V, the resistance of the resistor R1 is 100 KΩ, and the resistance of the resistor R2 is 10 KΩ, a current of 360 µA passes from the first branch point 11 through the resistor R1. The current is distributed to the ground and the detecting transistor Tr2 at the second branch point 12.

Thus, in the stepping motor connection detecting system according to the present embodiment, not only an omission of a connector can be detected, but also a breaking of driving wiring on the stepping motor side or a short circuit to a unit frame can be detected from the connector.

In the embodiment 1 above, an abnormal condition monitoring process is performed only when the driving transistor Tr1 is in the off state. During the drive of the stepping motor 4, the driving transistor Tr1 is frequency turned on and off. Accordingly, although an error occurs when the driving transistor Tr1 indicates the on state, the error can be detected in the abnormal condition monitoring process in the next off state, thereby causing no serious problem.

### Embodiment 2

However, when the driving transistor Tr1 is in the on state, the IN1 signal indicates the high state. Therefore, if the timing of the abnormal condition monitoring process is shifted, the high state of the IN1 signal when the driving transistor Tr1 indicates the on state can be erroneously detected as the high state when the transistor Tr1 indicates the off state.

In the embodiment 2, the abnormal condition monitoring process can be performed regardless of the on or off state of the driving transistor Tr1 without the possibility of the erroneous detection above, and an error such as an omission of a connector, a breaking, etc. can be detected constantly and stably.

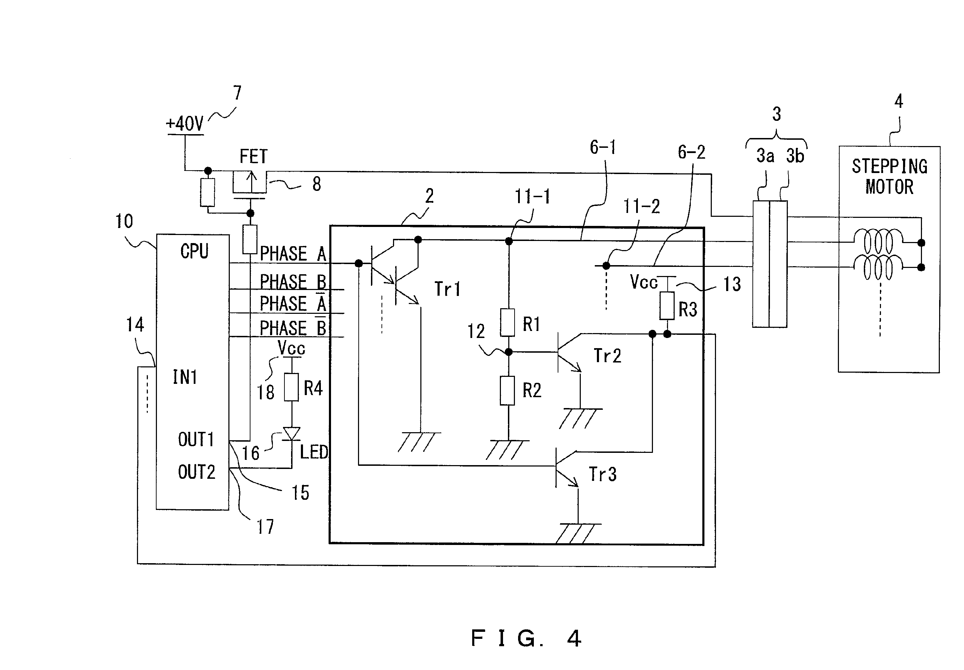

FIG. 4 illustrates the motor connection detecting circuit according to the embodiment 2. In FIG. 4, the same component or function as in FIG. 1 is assigned the same reference numeral. The motor connection detecting circuit illustrated in FIG. 4 is an example of a configuration in the motor driver 2.

FIG. 4 is different from FIG. 1 in that two detecting transistors are provided. That is, the motor connection detecting circuit according to the present embodiment is configured by the driving transistor Tr1 illustrated in FIG. 1 as a first detecting transistor Tr2 with a newly provided second detecting transistor Tr3 wired-OR-connected to the collector of the first detecting transistor Tr2.

A signal synchronized with the drive signal of the driving transistor Tr1 is input to the base of the second detecting transistor Tr3. Since the configuration is otherwise the same as the configuration illustrated in FIG. 1, the detailed description is omitted here.

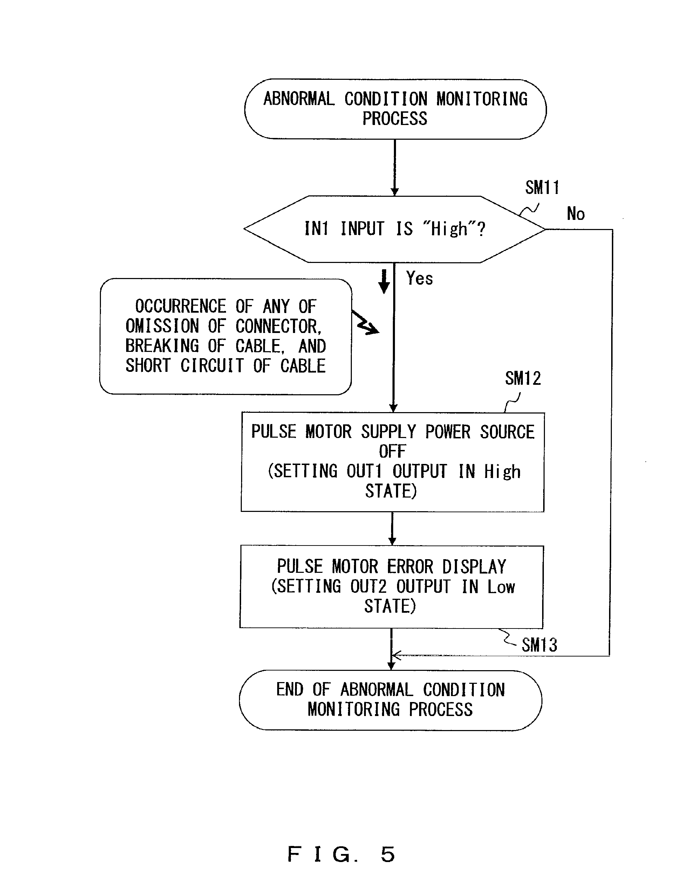

FIG. 5 is a flowchart of the driving process including the abnormal condition monitoring process of the stepping motor in the motor connection detecting circuit according to present embodiment with the above-mentioned configuration. The process in FIG. 5 does not include the process illustrated in FIG. 2A, and the control unit 10 constantly monitors the IN1 signal regardless of the on/off state of the driving transistor Tr1.

The IN1 signal monitored by the control unit 10 in the process in step SM11 in FIG. 5 is the output signal of a wired OR connection unit for the first detecting transistor Tr2 and the second detecting transistor Tr3.

When the control unit 10 detects that the IN1 signal enters the high state, it performs the processes in steps SM12 and SM13. The processes in steps SM12 and SM13 are the same as the processes in steps SM2 and SM3 in FIG. 2B. On the other, when the control unit 10 detects that IN1 signal enters the low state, it ends the abnormal condition monitoring process.

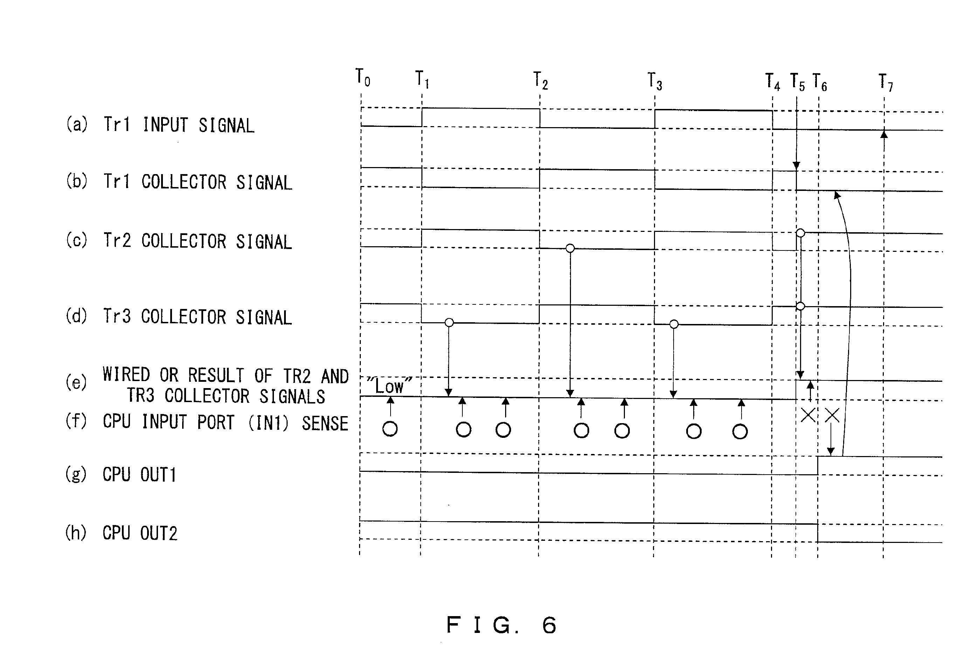

FIGS. 6(a) through 6(h) are timing charts of the timing of turning on and off of each unit described with reference to the flowchart in FIG. 5. FIG. 6 (a) illustrates an input signal input to the base of the driving transistor Tr1, and FIG. 6(b) illustrates a collector signal of the driving transistor Tr1.

FIG. 6 (c) also illustrates a collector signal of the first detecting transistor Tr2, and FIG.6 (d) illustrates a collector signal of the second detecting transistor Tr3. FIG. 6(e) illustrates an output signal of a wired OR connection unit for the first and second detecting transistors Tr2 and Tr3.

FIG. 6 (f) illustrates a result of the recognition of the control unit 10 for the output signal of the wired OR connection unit input to the detecting IN1 signal input port 14.

The mark "o" as the result of the recognition indicates that there is no abnormal condition in the motor driver 2 and the driving wiring 6, and the mark "x" indicates that there is an abnormal condition in the motor driver 2 or the driving wiring 6, that is, an error such as an omission of a connector, a break in the driving wiring 6, a short circuit between the driving wiring 6 and the unit frame, etc. has occurred.

FIG. 6 (g) illustrates an OUT1 signal output from the OUT1 signal output port 15 of the control unit 10, and FIG.6(h) illustrates an OUT2 signal output from the OUT2 signal output port 17 of the control unit 10.

The period from time T0 to T5 illustrated in FIG. 6 indicates a signal in the normal condition. The time T0 to T2 corresponds to the operation similar to the operation at time t0 to t2 in FIG. 3.

From time T0 to T5 in FIG. 6, the operations of the collector signals of the driving transistor Tr1 and the first detecting transistor Tr2 illustrated in FIGS. FIGS. 6(b) and 6 (c) corresponding to the low and high states of the base input signal of the driving transistor Tr1 illustrated in FIG. 6(a) are described above with reference to the operations at time t0 to t3 in FIG. 3.

On the other hand, the collector signal of the second detecting transistor Tr3 in the present embodiment is synchronized with the drive signal of the driving transistor Tr1, and indicates the low state when the drive signal of the Tr1 is in the high state, and indicates the high state when the drive signal of the Tr1 is in the low state.

Therefore, the output signal of the wired OR connection unit for the first and second detecting transistors Tr2 and Tr3 is constantly in the low state. That is, in the normal operation, the IN1 signal is constantly in the low state. Therefore, the control unit 10 does not erroneously detect the high state.

Assume that an error such as an omission of a connector, a breaking or a short circuit of the driving wiring 6-1, etc. has occurred at time T5 when the driving transistor Tr1 indicates non-driving timing. In any of these cases, no current passes from the DC power source 7 to the driving wiring 6-1. That is, the potential of the first branch point 11 is 0.

Therefore, the potential of the second branch point 12 is also 0, and the first detecting transistor Tr2 enters the off state. When the detecting transistor Tr2 indicates the off state, it collector signal enters the high state by the voltage applied from the detecting power source 13.

On the other hand, since the second detecting transistor Tr3 enters the off state in synchronization with the low signal in the non-driving state input to the base of the driving transistor Tr1, the collector signal of the second detecting transistor Tr3 is in the high state.

That is, since the collector signals of the first and second detecting transistors Tr2 and Tr3 are both in the high state, the output signal of the wired OR connection unit is in the high state. The control unit 10 detects that the IN1 signal to be constantly in the low state indicates the high state (YES in step SM11 in FIG. 5).

Therefore, the control unit 10 determines that the IN1 signal of the wired OR connection unit indicates "x" as illustrated in FIG. 6 (f) , that is, an error such as an omission of a connector of the connector 3, a breaking of the driving wiring 6, a short circuit between the driving wiring 6 and the unit frame has occurred.

When the control unit 10 determines that the IN1 signal of the wired OR connection unit indicates "x", it closes the switch of the switching FET with the OUT1 signal placed in the high state at time T6 as illustrated in FIG. 6(g), and stops the power supply to the stepping motor 4 (step SM12 in FIG. 5) .

Furthermore, the control unit 10 likewise places the OUT2 signal in the low state at time T6 as illustrated in FIG. 6 (h) , turns on the warning LED, and externally notifies that an error such as an omission of a connector, a breaking of driving wiring, a short circuit between the driving wiring and a unit frame, etc. has occurred (step SM13 in FIG. 5). Then, the abnormal condition monitoring process is terminated.

Thus, the stepping motor connection detecting circuit can detect on the driving circuit side an omission of a connector for connecting a driving circuit to a stepping motor or a breaking or a short circuit in the wiring between the connector to the stepping motor.

In the example illustrated in FIG. 6, described is a case in which an omission of a connector, a breaking in the driving wiring 6-1, etc. has occurred at time T5 when the driving transistor Tr1 enters the timing of non-driving.

However, the present invention is not limited to this application, but since the IN1 signal of the wired OR connection unit enters the high state if the nextr1 enters the timing of non-driving when an omission of a connector, a breaking of the driving wiring 6-1, etc. occurs when the driving transistor Tr1 is in the driving timing, thereby the error can be immediately detected.

The present invention is not limited to the above-mentioned embodiment, but can be varied in many ways at the embodying stage within the scope of the claims.

## Claims

1. A stepping motor connection detecting circuit, comprising:
a first branch point (11-1, 11-2, ...) provided for each arrangement of wiring (6-1, 6-2, ...) corresponding to each coil (5-1, 5-2, ...) of the stepping motor from a connector (3), which connects a stepping motor (4) to a driving circuit (2), to the driving circuit (2);
first and second resistors (R1, R2) provided in a series between the first branch point (11-1, 11-2, ...) and a ground;
a second branch point (12) provided between the first and second resistors (R1, R2);
a detecting transistor (Tr2) whose base is connected to the second branch point (12), whose detecting power source is connected to a collector through a third resistor, and whose emitter is grounded; and
a control unit (10) in which a collector signal of the detecting transistor (Tr2) is connected to a detecting input port.

2. The circuit according to claim 1, wherein
when the first resistor (R1) is a resistor R1 on the power source side and a resistance of the resistor is R1, and the second resistor (R2) is a resistor R2 on the grounding side and a resistance of the resistor is R2, then R1 is larger than R2 (R1 > R2) .

3. The circuit according to claim 1, wherein
the control unit (10) is arranged to determine that there is no abnormal condition in the connection of the connector (3) and in the wiring (6-1, 6-2, ...) corresponding to each coil (5-1, 5-2, ...) of the stepping motor (4) when the collector signal is in a low state, and to determine that there is an omission of the connector (3) or that there is a break or a short circuit in the wiring (6-1, 6-2, ...) to the stepping motor (4) connected to the detecting transistor (Tr2) whose collector signal enters a high state through the second branch point (12) and the first branch point (11-1, 11-2, ...) when the collector signal is in the high state.

4. A stepping motor connection detecting circuit, comprising:
a first branch point (11-1, 11-2, ...) provided for each arrangement of wiring (6-1, 6-2, ...) corresponding to each coil (5-1, 5-2, ...) of the stepping motor (4) from a connector (3), which connects the stepping motor (4) to a driving circuit (2), to the driving circuit (2);
first and second resistors (R1, R2) provided in a series between the first branch point (11-1, 11-2, ...) and a ground;
a second branch point (12) provided between the first and second resistors (R1, R2);
a first detecting transistor (Tr2) whose base is connected to the second branch point (12), whose detecting power source is connected to a collector through a third resistor (R3) , and whose emitter is grounded;
a second detecting transistor (Tr2) which is wired OR connected to the collector of the first detecting transistor (Tr2), whose base receives a signal synchronous with a drive signal of the driving circuit (2), and whose emitter is grounded; and
a control unit (10) whose detecting input port has a connection of a signal from the wired OR connection.

5. The circuit according to claim 4, wherein
control unit (10) is arranged to determine that there is no abnormal condition in the connection of the connector (3) and in the wiring (6-1, 6-2, ...) corresponding to each coil (5-1, 5-2, ...) of the stepping motor (4) when the signal from the wired OR connection is in a low state, and to determine that there is an omission of the connector (3) or that there is a break or a short circuit in the wiring (6-1, 6-2, ...) to the stepping motor (4) connected to the wired-OR-connected first detecting transistor (Tr2) whose signal enters a high state through the second branch point (12) and the first branch point (11-1, 11-2, ...) when the signal from the wired OR connection is in the high state.

6. The circuit according to claim 3 or 5, wherein
when the control unit (10) determines that there is an omission of the connector (3), or there is a break or a short circuit in the wiring (6-1, 6-2, ...) corresponding to each coil (5-1, 5-2, ...) of the stepping motor (4), the unit is arranged to externally notify the occurrence of an abnormal condition.
